# EUROPEAN PATENT SPECIFICATION

(11) **EP 2 982 941 B1**
(45) Date of publication and mention of the grant of the patent: **27.02.2019**
(21) Application number: 14465518.0
(22) Date of filing: 07.08.2014
(51) Int. Cl.: G01D 11/24, B60R 11/04, B60R 11/00

(54) **Sensor device housing**
Sensorvorrichtungsgehäuse
Boîtier de dispositif de capteur

(43) Date of publication of application: 10.02.2016
(73) Proprietor: Conti Temic Microelectronic GmbH, 90411 Nürnberg (DE); Continental Automotive GmbH, 30165 Hannover (DE)
(72) Inventor: Botusescu, Adrian, 300507 Timisoara (RO); Fechner, Thomas, 88142 Wasserburg (DE); Müller, Gerhard, 88339 Bad Waldsee (DE)

(56) References cited:
- WO-A1-2015/176719
- DE-A1-102011 055 928
- DE-A1-102011 103 302
- DE-A1-102012 200 031
- DE-A1-102013 200 966
- US-A- 4 733 335
- US-A1- 2003 117 776
- US-A1- 2008 117 599
- US-A1- 2012 320 531

## Description

The invention relates to an electronic sensor device of a driver assistance system.

Driver assistance systems of vehicles can be connected to sensor devices, in particular optical sensor devices such as cameras. As the complexity of the driver assistance system is increasing continuously and the functions provided by the driver assistance system on the basis of sensor data received from driver assistance cameras become more, the required computing power and thus the consumed electrical power grows. Optical sensor devices which observe the surrounding of a vehicle can be mounted to the windscreen of a vehicle. Different sensor devices such as driver assistance cameras can be provided within the sensor device housing of the respective sensor device and separated from the passenger room of the vehicle by a beauty cover.

An exemplary sensor device housing is known from DE 10 2011 055 928 A1.

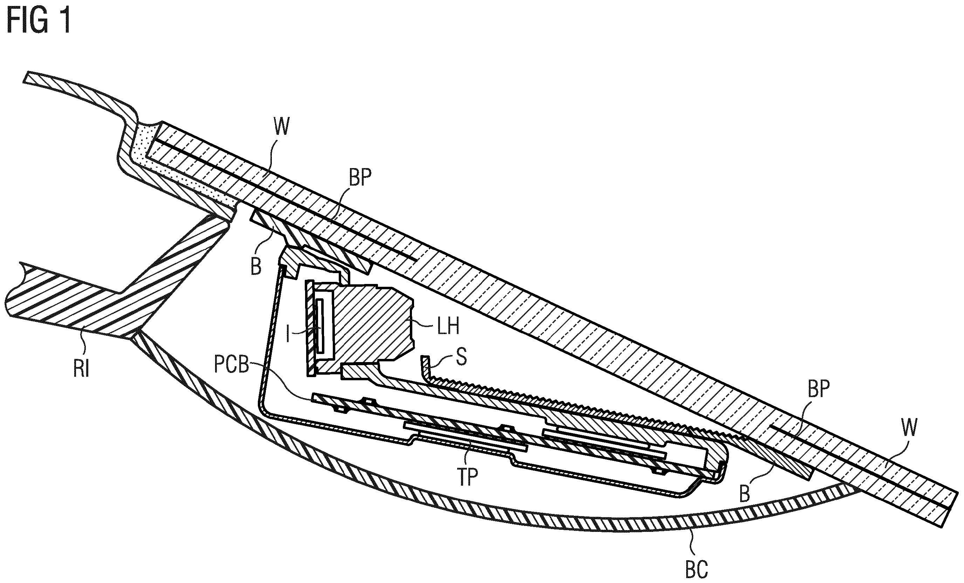

Figure 1 shows a typical mounting situation of a driver assistance camera in a vehicle. As can be seen, the windscreen W of the vehicle is glued to the vehicle roof and can comprise a so-called black print BP. The upper part of a housing of the driver assistance camera is attached by means of a bracket B to the windscreen W and a lower part of the camera housing faces a beauty cover BC attached to a roof interior RI. The lower part of the bracket B can comprise a stray light cover S as illustrated in Figure 1. The camera shown in Figure 1 comprises a printed circuit board PCB, an imager I and a lens holder LH. The internal printed circuit board PCB within the camera housing can support components C with a high power consumption which dissipate heat that can be transported via a thermal paste TP to the lower part of the camera housing as illustrated in Figure 1.

As can be seen in Figure 1, the driver assistance cameras having electronic devices dissipating heat are mounted in an area with additional power insertion by sunlight irradiation through the windscreen W of the vehicle. In general, power dissipation is provided by three different physical effects, i.e. discharging the generated heat to an ambient airflow, heat radiation and/or heat conduction. Due to the mounting position of the sensor device housing behind the beauty cover BC, a sufficient airflow for discharging the generated heat is not possible. Moreover, heat conduction cannot be considered as significant for the mounting situation of Figure 1.

Accordingly, it is an object of the present invention to provide an electronic sensor device comprising a sensor device housing which allows to keep the temperature in the mounting area of the sensor device within the operation limits of the sensor device.

This object is achieved by the sensor device comprising the features of claim 1.

The invention provides according to a first aspect of the present invention an electronic sensor device of a driver assistance system comprising a sensor device housing being attachable to a windscreen of a vehicle,
wherein the sensor device housing comprises a high thermal emissivity to dissipate power generated by electronic components of said electronic sensor device to the environment.

With the sensor device housing of the sensor device according to the first aspect of the present invention, the power dissipation is optimized so that the temperature of the sensor device within the sensor device housing can be kept within predetermined operation limits.

In a possible embodiment of the sensor device according to the first aspect of the present invention, the sensor device housing comprises a metal housing provided at least partially with a coating having a high emissivity.

In a further possible embodiment of the sensor device according to the first aspect of the present invention, the coating having a high emissivity is applied to the metal housing by painting, powder coating, anodizing or by applying labels.

In a further possible embodiment of the sensor device according to the first aspect of the present invention, the outside surface of the sensor device housing is provided with a coating comprising a material having a high thermal emissivity of more than 0.7 or preferably even more than 0.8 or 0.9.

According to the first aspect of the present invention, the inside surface of the sensor device housing is provided with a thermal radiation absorbing coating to receive heat radiated from the electronic components of said electronic sensor device within said sensor device housing.

In a still further possible embodiment of the sensor device housing according to the first aspect of the present invention, the metal housing provided with a coating with a high thermal emissivity comprises electrical contact areas to contact the coated metal housing with the electronic components of said electronic sensor device within the sensor device housing.

According to the first aspect of the present invention, the electronic components are mounted on at least one printed circuit board of said electronic sensor device.

According to the first aspect of the present invention, the sensor device housing comprises,
a first housing part facing the windscreen of the vehicle, and
a second housing part facing the interior of the vehicle passenger room of the vehicle.

According to the first aspect of the present invention, the outside surface of the first housing part of said sensor device housing facing the windscreen of the vehicle is provided with a thermal radiation reflecting coating to prevent direct or indirect power insertion into the sensor device housing caused by sunlight radiation penetrating through the windscreen from the environment.

According to the first aspect of the present invention, the outside surface of the second housing part of said sensor device housing facing the interior of the vehicle passenger room is provided with a thermal radiation emitting coating with high emissivity to radiate power from said sensor device housing.

In a still further possible embodiment of the sensor device according to the first aspect of the present invention, electronic components of said electronic device generating thermal power are mounted on a bottom side of at least one printed circuit board and are directly connected to the second housing part of the sensor device housing to radiate the generated power.

In a still further possible embodiment of the sensor device according to the first aspect of the present invention, the sensor device housing is attached to the windscreen of the vehicle by at least one mounting bracket.

In a still further possible embodiment of the sensor device according to the first aspect of the present invention, the sensor device housing being attached to the windscreen is surrounded by a beauty cover mounted to an interior roof of the vehicle.

According to an example not part of the invention, the sensor device housing is a plastic housing made of a plastic material having a high emissivity of more than 0.7 or even more than 0.8 to 0.95.

In a still further possible embodiment of the sensor device according to the first aspect of the present invention, the electronic sensor device is a camera viewing through the windscreen of the vehicle.

The invention further provides according to a second aspect a driver assistance system with the features of claim 8.

In the following, possible embodiments of the different aspects of the present invention are described in more detail with reference to the enclosed figures.
- Figure 1: shows a mounting situation of a conventional camera of a driver assistance system attached to a wind-screen of a vehicle;
- Figure 2: shows a schematic diagram for illustrating an exemplary embodiment of a sensor device according to an aspect of the present invention.

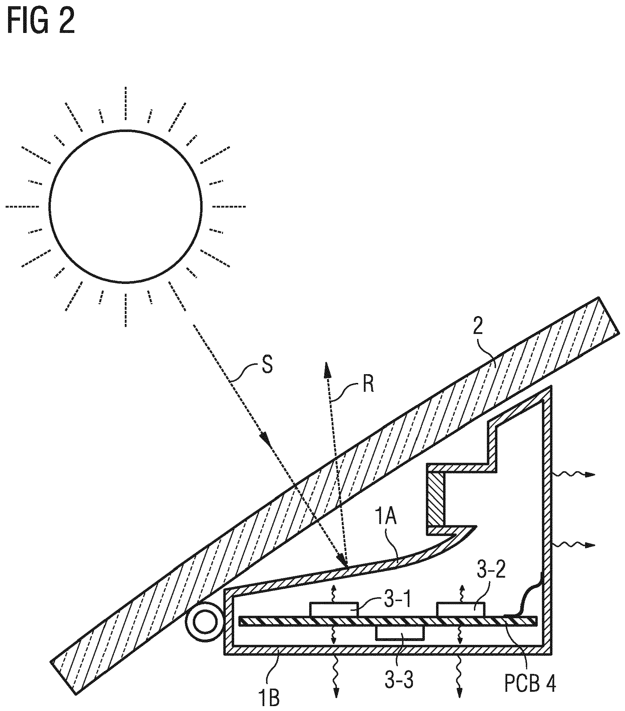

As can be seen in Figure 2, a sensor device housing 1 according to the first aspect of the present invention can be provided for at least one electronic sensor device such as an optical sensor device in particular a camera. As can be seen in Figure 2, the sensor device housing 1 can be attached to a windscreen 2 of a vehicle by means of a mounting device such as a bracket. In the shown section view of Figure 2, the sensor device comprises electronic components 3-1, 3-2, 3-3 mounted on a printed circuit board 4 of the electronic sensor device. During operation of the sensor device, the electronic components 3-i dissipate power. The sensor device housing 1 is made from a material comprising a high thermal emissivity to dissipate the power generated by the electronic components 3-i of the electronic sensor device to the environment. The sensor device housing 1 can comprise a metal housing provided at least partially with a coating having a high thermal emissivity of more than 0.7. In a preferred embodiment, the thermal emissivity of the sensor device housing 1 is more than 0.8 or even more than 0.9. For any particular wavelength and temperature, the amount of thermal radiation emitted depends on the emissivity of the object's surface. The emissivity can be defined as the ratio of energy radiated from a material surface to said radiated from a black body, i.e. perfect emitter, at the same temperature and wavelength and under the same conditions. The emissivity is dimensionless and ranges from zero for a perfect reflector to 1 for a perfect emitter. The emissivity of a surface depends not only on the material but also on the nature of the surface. A clean and polished metal surface has a lower emissivity than a roughened and oxidized metal surface. The emissivity can also depend on the temperature T of the surface and the wavelength and radiation angle. In a possible embodiment, the sensor device housing 1 comprises a roughened and oxidized metal surface with increased emissivity. This metal housing can be provided at least partially with a coating having an even higher emissivity. The coating having a high emissivity can be applied to the metal housing by painting, powder coating, anodizing or by applying labels. In a possible embodiment, the outside surface of the sensor device housing 1 is provided with a coating comprising a material having a very high thermal emissivity of more than 0.8. Further, the inside surface of the sensor device housing 1 is provided with a thermal radiation absorbing coating to receive heat radiated from the electronic components 3-i of the electronic sensor device located within the sensor device housing 1. The electronic components 3-i are mounted on at least one printed circuit board 4 of the electronic sensor device as shown in Fig. 2. The inside of the sensor device housing 1 is provided with a thermal radiation absorbing coating to absorb the heat radiated from the components within the sensor device housing 1. It is preferred that for the purpose of electrical shielding the coating is carried out such that an electrical contact between the components 3-i of the electronic sensor device and the housing 1 is possible. This can for example be achieved by a metal casing, wherein the coating is only partially and suitable contact points are provided. The outside of the sensor device housing 1 is covered by a coating such that the generated heat is emitted from the sensor device housing 1.

This does not need to be the case for the complete housing. The sensor device housing 1 comprises a first housing part 1A facing the windscreen 2 of the vehicle and a second housing part 1B facing the interior of a vehicle passenger room of the vehicle. The outside surface of the first housing part 1A of the sensor device housing 1 facing the windscreen 2 is provided with a radiation reflecting coating to prevent direct or indirect power insertion into the sensor device housing 1 by sunlight radiation S penetrating through the windscreen 2 from the environment. The black print, a bracket or a stray light cover can be heated up by the sunlight to a higher temperature than the sensor device housing 1 and thus become a source for heat radiation. Aluminum can have a low emissivity in the range of 0.05 to 0.15 depending on the surface. The outside surface of the second housing part 1B of the sensor device housing 1 facing the interior of the vehicle passenger room is provided with a thermal radiation emitting coating with a high emissivity to radiate heat from said sensor device housing 1. The sensor device comprises one or more printed circuit boards 4 populated with electronic components 3-i which heat up during operation of the sensor device. The printed circuit boards 4 are installed within the closed sensor device housing 1. The sensor device body or housing is in turn attached to the windscreen 2 of the vehicle by means of at least one mounting bracket.

In a possible embodiment, the electronic components 3-i of the electronic device generating thermal power are mounted on a bottom side of at least one printed circuit board 4 and can be directly connected to the second housing part 1B of the sensor device housing 1 to radiate the generated power. In a possible embodiment, the sensor device housing 1 can be attached to the windscreen 2 and can be surrounded by a beauty cover mounted to an interior roof of the vehicle. In an example not part of the invention, the sensor device housing 1 can be made of a plastic housing made of a plastic material having a high emissivity of more than 0.8 or even more than 0.9. In a possible embodiment, the electronic sensor device in the sensor device housing 1 can be an optical sensor device, in particular a camera, viewing through the windscreen 2 of the vehicle. In a conventional setup, components of a sensor device are thermally connected to the sensor device housing 1 by thermal paste or thermal pads as also illustrated in Figure 1. This ensures that the generated power is transported to the sensor device housing 1 with a low thermal resistance. With the sensor device housing 1 according to the first aspect of the present invention, the thermal resistance to the cover of the housing is significantly reduced by coating the outside of the sensor device housing 1 with a material which has high thermal emissivity. A separation between the sensor device and the windshield 2 using the low conductivity and low emissivity material is part of the setup according to an embodiment of the present invention. This separation can be either achieved by the straylight cover or bracket or on the top side of the sensor device or can be achieved by a separate component. Less heat irradiated by the windscreen 2 and the bracket will then be transferred to the sensor device. The power generated by the sensor device is radiated inside the sensor device cover. A high emissivity cover does improve this setup.

The mechanical connection between the sensor device and bracket is limited to only small points. The major area of the sensor device, such as a camera, is mounted with an air cushion to the bracket which is isolating the sensor device thermally. An air cushion will act as a low conductive material protecting the sensor device from sun irradiation penetrating through the windscreen 2. In a preferred embodiment, high power consuming components, such as the component 3-3 illustrated in Figure 2, are positioned on the bottom side of the printed circuit board 4 to be directly connected to the lower part 1B of the sensor device housing 1 which is radiating the power.
By changing the emissivity of the inner side of the sensor device housing 1, a better irradiation of the power radiated by hot electronic components 3-i is increased. By doing this, in some cases a thermal paste can even be omitted.
To ensure an electrical connection of the printed circuit board 4 to the sensor device housing 1, in an example not part of the invention, only the outside of the sensor device housing 1 is coated. In this example, a direct electrical connection of the printed circuit board 4 and the sensor device housing 1 is possible. In the device of the invention, where the complete lower part 1B of the sensor device housing 1 is coated, i.e. the inner and outer side, special measures are provided to ensure an electrical connection. These measures comprise pins which are puncturing through the coating or measures to keep out the coating in the attaching area or measures in the uncoated part of the housing cutting into the coated part of the housing while crimping. In an example not part of the invention, a plastic housing can be used. In this example, the high emissivity can be achieved without performing a coating. The sensor device housing 1 according to the first aspect of the present invention can be used to receive one or several sensor devices of the same or different types. The invention further provides a sensor device such as a camera being surrounded by a sensor device housing 1 attachable to a windscreen 2 of a vehicle, wherein the sensor device housing 1 comprises a high thermal emissivity to dissipate power generated by the electronic components 3-i of the electronic sensor device to the environment. The invention further provides according to a second aspect a driver assistance system of a vehicle comprising at least one sensor device having a sensor device housing 1 with a high thermal emissivity to dissipate power generated by electronic components 3-i of the electronic sensor device to the environment.

In a possible embodiment, the electronic sensor device is a camera mounted at the windscreen 2 of a vehicle. With the sensor device housing 1 according to the present invention, it is possible to keep the temperature T in the mounting area of the sensor device within a predetermined operation limit so that the operation lifetime of the sensor device is increased. The sophisticated sensor device housing 1 according to the first aspect of the present invention is particularly useful for maintaining the operation temperature if the sensor device housing 1 is surrounded by a beauty cover BC which prohibits efficient airflow and heat conduction for transporting the generated power or heat. The heat radiated by the sensor device housing 1 will be typically absorbed by the beauty cover BC. In a preferred embodiment the beauty cover BC also comprises a high emissivity. In a further possible embodiment, the printed circuit board PCB has a coating to transport heat from the PCB to the sensor device housing 1.

## Claims

1. An electronic sensor device of a driver assistance system, comprising a sensor device housing (1) being attachable to a windscreen (2) of a vehicle,
**characterized in that** the sensor device housing (1) comprises a high thermal emissivity of more than 0,7 to dissipate power generated by electronic components (3) of said electronic sensor device to the environment,
wherein the sensor device housing (1) comprises a first housing part (1A) facing the windscreen (2) of the vehicle, and a second housing part (1B) facing the interior of a vehicle passenger room of the vehicle,
wherein the outside surface of the first housing part (1A) of said sensor device housing (1) facing the windscreen (2) of the vehicle is provided with a thermal radiation reflecting coating to prevent power insertion into the sensor device housing (1) by sunlight radiation (S) penetrating through said windscreen (2) from the environment,
wherein the outside surface of the second housing part (1B) of said sensor device housing (1) facing the interior of the vehicle passenger room is provided with a thermal radiation emitting coating with high emissivity to radiate power from said sensor device housing (1),
wherein the inside surface of the sensor device housing (1) is provided with a thermal radiation absorbing coating to receive heat radiated from the electronic components (3) of said electronic sensor device within said sensor device housing (1), and
wherein pins are puncturing through the coating on the inside surface of the second housing part (1B) for providing an electrical connection between the printed circuit board (4) and the sensor device housing (1).

2. The electronic sensor device according to claim 1 wherein the sensor device housing (1) comprises a metal housing provided at least partially with a coating having a high emissivity.

3. The electronic sensor device according to claim 2 wherein the coating having a high emissivity is applied to the metal housing by painting, powder coating, anodizing or by applying labels.

4. The electronic sensor device according to one of the preceding claims 1 - 3 wherein the metal housing provided with a coating with a high thermal emissivity comprises electrical contact areas to contact the coated metal housing with the electronic components (3) of said electronic sensor device within the sensor device housing (1).

5. The electronic sensor device according to one of the preceding claims 1 - 4 wherein the sensor device housing (1) is attached to the windscreen (2) by means of at least one mounting bracket.

6. The electronic sensor device according to claim 5 wherein the sensor device housing (1) being attached to the windscreen (2) is surrounded by a beauty cover mounted to an interior roof of the vehicle.

7. The electronic sensor device according to one of the preceding claims 1 - 6 wherein the electronic sensor device is a camera viewing through the windscreen (2) of the vehicle.

8. A driver assistance system of a vehicle comprising at least one electronic sensor device according to one of the preceding claims 1 - 7.

## Patentansprüche

1. Elektronische Sensorvorrichtung eines Fahrerassistenzsystems, umfassend ein Sensorvorrichtungsgehäuse (1), das an einer Windschutzscheibe (2) eines Fahrzeugs befestigbar ist,
**dadurch gekennzeichnet, dass** das Sensorvorrichtungsgehäuse (1) ein hohes Wärmeemissionsvermögen von mehr als 0,7 umfasst, um Energie, die durch elektronische Bauteile (3) der elektronischen Sensorvorrichtung erzeugt wird, in die Umgebung abzuleiten,
wobei das Sensorvorrichtungsgehäuse (1) einen ersten Gehäuseteil (1A), der der Windschutzscheibe (2) des Fahrzeugs zugewandt ist, und einen zweiten Gehäuseteil (1B), der dem Inneren eines Fahrzeugfahrgastraums des Fahrzeugs zugewandt ist, umfasst,
wobei die Außenfläche des ersten Gehäuseteils (1A) des Sensorvorrichtungsgehäuses (1), die der Windschutzscheibe (2) des Fahrzeugs zugewandt ist, mit einer Wärmestrahlungsreflexionsbeschichtung versehen ist, um eine Einbringung von Energie durch Sonnenlichtstrahlung (S), die aus der Umgebung durch die Windschutzscheibe (2) eindringt, in das Sensorvorrichtungsgehäuse (1) zu verhindern,
wobei die Außenfläche des zweiten Gehäuseteils (1B) des Sensorvorrichtungsgehäuses (1), die dem Inneren des Fahrzeugfahrgastraums zugewandt ist, mit einer Wärmestrahlungsemissionsbeschichtung mit einem hohen Emissionsvermögen versehen ist, um Energie aus dem Sensorvorrichtungsgehäuse (1) abzustrahlen,
wobei die Innenfläche des Sensorvorrichtungsgehäuses (1) mit einer Wärmestrahlungsabsorptionsbeschichtung versehen ist, um Wärme aufzunehmen, die aus den elektronischen Bauteilen (3) der elektronischen Sensorvorrichtung innerhalb des Sensorvorrichtungsgehäuses (1) abgestrahlt wird, und wobei Stifte die Beschichtung auf der Innenfläche des zweiten Gehäuseteils (1B) durchstechen, um eine elektrische Verbindung zwischen der Leiterplatte (4) und dem Sensorvorrichtungsgehäuse (1) bereitzustellen.

2. Elektronische Sensorvorrichtung nach Anspruch 1, wobei das Sensorvorrichtungsgehäuse (1) ein Metallgehäuse umfasst, das zumindest teilweise mit einer Beschichtung mit einem hohen Emissionsvermögen versehen ist.

3. Elektronische Sensorvorrichtung nach Anspruch 2, wobei die Beschichtung mit einem hohen Emissionsvermögen mittels Anstreichen, Pulverbeschichten, Anodisieren oder durch Etikettieren auf das Metallgehäuse aufgebracht ist.

4. Elektronische Sensorvorrichtung nach einem der vorangehenden Ansprüche 1 bis 3, wobei das Metallgehäuse, das mit einer Beschichtung mit einem hohen Wärmeemissionsvermögen versehen ist, elektrische Kontaktflächen umfasst, um das beschichtete Metallgehäuse mit den elektronischen Bauteilen (3) der elektronischen Sensorvorrichtung innerhalb des Sensorvorrichtungsgehäuses (1) in Kontakt zu bringen.

5. Elektronische Sensorvorrichtung nach einem der vorangehenden Ansprüche 1 bis 4, wobei das Sensorvorrichtungsgehäuse (1) mittels mindestens einer Befestigungsklammer an der Windschutzscheibe (2) befestigt ist.

6. Elektronische Sensorvorrichtung nach Anspruch 5, wobei das an der Windschutzscheibe (2) befestigte Sensorvorrichtungsgehäuse (1) von einer an einem Innendach des Fahrzeugs montierten Schönheitsabdeckung umgeben ist.

7. Elektronische Sensorvorrichtung nach einem der vorangehenden Ansprüche 1 bis 6, wobei die elektronische Sensorvorrichtung eine Kamera ist, die durch die Windschutzscheibe (2) des Fahrzeugs blickt.

8. Fahrerassistenzsystem eines Fahrzeugs, umfassend mindestens eine elektronische Sensorvorrichtung nach einem der vorangehenden Ansprüche 1 bis 7.

## Revendications

1. Dispositif de capteur électronique d'un système d'aide à la conduite, comprenant un boîtier de dispositif de capteur (1) pouvant être attaché à un pare-brise (2) d'un véhicule,
**caractérisé en ce que** le boîtier de dispositif de capteur (1) comprend une émissivité thermique élevée supérieure à 0,7 pour dissiper l'énergie générée par des composants électroniques (3) du susdit dispositif de capteur électronique vers l'environnement,
le boîtier de dispositif de capteur (1) comprenant une première partie de boîtier (1A) faisant face au pare-brise (2) du véhicule, et une deuxième partie de boîtier (1B) faisant face à l'intérieur d'un habitacle pour passagers du véhicule,
la surface extérieure de la première partie de boîtier (1A) du susdit boîtier de dispositif de capteur (1) faisant face au pare-brise (2) du véhicule étant munie d'un revêtement réfléchissant le rayonnement thermique pour empêcher la pénétration d'énergie dans le boîtier de dispositif de capteur (1) par le rayonnement solaire (S) pénétrant à travers le susdit pare-brise (2), à partir de l'environnement,
la surface extérieure de la deuxième partie de boîtier (1B) du susdit boîtier de dispositif de capteur (1) faisant face à l'intérieur de l'habitacle pour passagers étant munie d'un revêtement émetteur de rayonnement thermique à émissivité élevée pour émettre de l'énergie à partir du boîtier de dispositif de capteur (1)
la surface intérieure du boîtier de dispositif de capteur (1) étant munie d'un revêtement d'absorption de rayonnement thermique pour recevoir la chaleur émise par les composants électroniques (3) du susdit dispositif de capteur électronique dans le boîtier de dispositif de capteur (1), et
des broches perçant le revêtement sur la surface intérieure de la deuxième partie de boîtier (1B) pour fournir une connexion électrique entre la carte à circuit imprimé (4) et le boîtier de dispositif de capteur (1).

2. Dispositif de capteur électronique selon la revendication 1, le boîtier de dispositif de capteur (1) comprenant un boîtier métallique muni au moins partiellement d'un revêtement ayant une émissivité élevée.

3. Dispositif de capteur électronique selon la revendication 2, le revêtement ayant une émissivité élevée étant appliqué au boîtier métallique par peinture, revêtement par poudre, anodisation ou par l'application d'étiquettes.

4. Dispositif de capteur électronique selon l'une quelconque des revendications précédentes 1-3, le boîtier métallique muni d'un revêtement avec une émissivité thermique élevée comprenant des zones de contact électrique pour connecter le boîtier métallique revêtu aux composants électroniques (3) du susdit dispositif de capteur électronique dans le boîtier de dispositif de capteur (1).

5. Dispositif de capteur électronique selon l'une quelconque des revendications précédentes 1-4, le boîtier de dispositif de capteur (1) étant attaché au pare-brise (2) au moyen d'au moins un support de montage.

6. Dispositif de capteur électronique selon la revendication 5, le boîtier de dispositif de capteur (1) étant attaché au pare-brise (2) étant entouré d'une protection esthétique montée sur un toit intérieur du véhicule.

7. Dispositif de capteur électronique selon l'une quelconque des revendications précédentes 1-6, le dispositif de capteur électronique étant une caméra visionnant à travers le pare-brise (2) du véhicule.

8. Système d'aide à la conduite d'un véhicule comprenant au moins un dispositif de capteur électronique selon l'une des revendications précédentes 1-7.
